# EUROPEAN PATENT SPECIFICATION

(11) **EP 3 502 763 B1**
(45) Date of publication and mention of the grant of the patent: **01.02.2023**
(21) Application number: 17306892.5
(22) Date of filing: 22.12.2017
(51) Int. Cl.: G02B 27/01, G03H 1/22, G03H 1/30

(54) **HEAD MOUNTED DEVICE COMPRISING A FOURIER HOLOGRAM**
KOPFMONTIERTE VORRICHTUNG MIT EINEM FOURIER-HOLOGRAMM
DISPOSITIF DE VISIOCASQUE COMPRENANT UN HOLOGRAMME DE FOURIER

(43) Date of publication of application: 26.06.2019
(73) Proprietor: Essilor International, 94220 Charenton-le-Pont (FR)
(72) Inventor: BOUCHIER, Aude, 94227 CHARENTON LE PONT CEDEX (FR); ARCHAMBEAU, Samuel, 94227 CHARENTON LE PONT CEDEX (FR); BALLET, Jérôme, 94227 CHARENTON LE PONT CEDEX (FR); CANO, Jean-Paul, 94227 CHARENTON LE PONT CEDEX (FR)
(74) Representative: Plasseraud IP

(56) References cited:
- EP-A1- 3 438 726
- WO-A1-2014/167290
- WO-A1-2015/032828
- WO-A1-2017/005608
- WO-A1-2017/115081
- MAURICIO ORTIZ-GUTIÉRREZ ET AL: "Norland Optical Adhesive 72 as phase holographic material", JOURNAL OF APPLIED RESEARCH AND TECHNOLOGY, vol. 13, no. 6, 1 December 2015 (2015-12-01), pages 561-565, XP055466050, ISSN: 1665-6423, DOI: 10.1016/j.jart.2015.10.014

## Description

The present invention relates to the field of methods and systems for augmented reality. The invention relates more particularly to the visualization of virtual images or holographic images.

Head-mounted devices with display features are known in the art. Such devices include so-called 'smart glasses', which allow the wearer thereof to visualize images or text for augmented reality.

In order to improve wearer visual comfort, it is desirable to provide methods and systems wherein images and text are displayed in a customized way that is specifically adapted to the wearer and/or to the worn device.

For ametropic wearers, visual comfort requires that suitable correction is provided not only for 'natural vision' (vision of the environment surrounding the wearer), but also for the visualization of the virtual image or holographic image.

WO 2015/032824 and WO 2015/032828 disclose head-mounted devices comprising a spatial light modulator for the display of computer-generated holographic images. Solutions based on OLED or LCD displays are also known from e.g. WO2016156614. However, although these solutions do present an interest for displaying complex and moving images, they often need an electronic driver and a microcomputer which proves heavy, bulky and energy consuming. The same is true of the screen itself and the source. Such shortcomings are of utter relevance in case of glasses.

WO2017/115081 A1 and WO2014/167290 A1 disclose head mounted devices comprising a light source and a Fourier hologram.

As such, there is a need for a compact low cost and low energy near-eye display able to display simple information.

The present invention makes up for the aforementioned need by providing a head-mounted device according to claim 1.

The virtual images can sometimes abusively be referred to as "holographic images" because of the fact that they are generated by a Fourier hologram. Preferably, the images are bidimensional because it is more convenient to provide a recorded Fourier transform of the virtual image which is bidimensional.

Said at least one light source need not be a coherent light source. A led or sunlight allows visualizing a Fourier hologram. However, preferably, said at least one light source is a coherent light source. Indeed, a Fourier hologram which has been recorded using a coherent light source (e.g. a green light source) can be visualized with a different coherent light source (e.g. a red light source), however the efficiency of the hologram would be decreased: the obtained virtual image would not be as bright, and it would be shifted compared to the original image.

As such, there is a technical advantage in using a light source which spectrum is as narrow as possible, and preferably a coherent light source.

Preferred coherent light sources include lasers and diodes. Such sources can generate a speckle in the generated virtual image. As such, it can be interesting to decrease the coherence of the source e.g. thanks to random introduction of noise in the laser through low random current modulation (and thus wavelength modulations), or through random movements of a diffuse medium (slow move of diffuser; electrically-driven diffusive liquid crystals and so on).It is also to be possible to use LEDs in external cavity close to coherent source.

Fourier holograms are mostly used in remotes technical fields such as applications from computer-aided design to gaming, holographic video for television, automotive etc.

The suitability of Fourier holograms for head mounted device is unexpected, e.g. because of the high accuracy needed to enable such small features on an eyewear, combined to the need for an external signal to selectively display pieces of information of interest.

Fourier hologram advantageously provides a confidential display: it is not possible to see the contents of the display for someone in front of the wearer.

Said at least one Fourier hologram can comprise at least one Fourier hologram located in a frame of the head mounted device. The frame is a convenient location for a Fourier hologram because it allows for an overall smaller hologram. Furthermore, the frame of head mounted device usually demonstrates a longer lifetime than the lenses, and need not be personalized as much as the lenses. Locating a Fourier hologram in the frame could allow the production of generic frame which could then be combined to specific lenses adapted to the optical correction needed by the wearer.

Said at least one Fourier hologram can comprise at least one Fourier hologram located in a layer of an ophthalmic lens provided inside the head mounted device. Integrating the Fourier hologram inside the ophthalmic lens can prove interesting as well as it can provide an increased accuracy in the location of the generated virtual images. This configuration also prevents the need for a holographic mirror.

The head mounted device according to the invention can comprise at least one holographic mirror.

Said at least one Fourier hologram can comprise at least one transmission Fourier hologram.

Said at least one Fourier hologram can comprise at least one reflection Fourier hologram. Use of either transmission or reflection hologram can prove convenient and make the position of the hologram a manageable issue.

The at least one virtual image can comprise at least one holographic image consisting in vector graphics, preferably consisting in a plurality of segments. Vector graphics are usually sufficient to display simple information such as arrows for GPS, low battery charge or message warnings, and so on. Complex displays can thus be replaced by a catalogue of fixed images. Each image can correspond to a Fourier hologram. Using a plurality of segment can allow displaying alphanumerical characters with a limited amount of Fourier holograms.

The at least one source can comprise at least two sources of two different colors. Of course, the at least one source can comprise a higher number of sources of a higher number of different colors. This allows visualizing multicolor images, or to select the color used to visualize the virtual image. Indeed, depending of the environment, different colors may be suited. For instance, in a vegetal environment, e.g. when hiking, using a red light source to display information can prove more useful than using a green light source.

The at least one Fourier hologram is recorded on at least one holographic plate. The holographic plate is preferably a transparent substrate such as glass or any suitable polymer, which has been coated with a photosensitive material, preferably a photopolymer or a mixture of photopolymers and/or dichromated gelatin. The layer thickness of photosensitive material is preferably comprised between 10 and 100 µm, more preferably between 20 and 30 µm. Several layers of different materials sensitive in different ranges of wavelengths can be used together.

If the Fourier hologram is a computer generated hologram which has been generated through calculation, a greater variety of materials can be used as a holographic plate. The calculated hologram can be printed on any transparent substrate. Computer generated holograms are cheaper than their analogical counterparts. The limitation in terms of resolution is the printing resolution, although photolithography can be used to mitigate this issue.

Both analogic and computer generated holograms can be used for producing a high number of holograms.

Analogic holography is preferred to develop a master hologram which is to be replicated e.g. through optical replication in photosensitive material deposed on a plastic sheet. The replication speed can reach 10m/min. Another technique is hologram embossing in a polymer matrix. In this case, the replication can be obtained thanks to molding methods, using transparent silicone. It is also possible to use mechanical embossing, UV casting, printing in photosensitive material, or even laser engraving and galvanoplasty for metallic hologram.

Fourier holograms can be combined with other function that can be recorded thanks to holography. Holographic mirrors can be used, e.g. by integrating off-axis mirrors for reflection holograms or filtering functions. It is also possible to correct geometrical aberrations by taking into account angles between the direction of the source, the holographic plate and the lens. The position of the image to the frame and the characteristics or preferences of the wearer (distances, places, and so on...) can also be adjusted.

Fourier holography is a well-known technique.

The at least one Fourier hologram can comprise a matrix of Fourier holograms recorded on a matrix of holographic plates consisting in an assembly of at least one unidimensional matrix of holographic plates. An assembly of unidimensional matrix can be a bidimensional matrix, i.e. a stack of unidimensional matrix, or even a tridimensional matrix. Providing a stack of unidimensional matrix rather than a single unidimensional matrix allows using deflecting elements with a lower deflection, for a given number of images. Using a matrix allow hiding the zero order and the conjugate image of the virtual image of interest, which are generated by the Fourier hologram.

Each unidimensional matrix of holographic plates can be associated to at least one light source and to at least one deflection element and/or blocking element, and wherein each at least one deflection element and/or blocking element is configured to allow associated light source to illuminate a Fourier hologram of interest recorded on the associated unidimensional matrix based on an external signal. The deflection elements and the blocking elements can be different or, alternatively a same element can be both deflecting and blocking.

A deflecting element is an element which can selectively orient or modify the path of the light from the source light. A blocking element is an element which is able to completely block the light from the source light. Any element able to perform such role can be used without departing from the scope of the present invention as defined by the claims. These are common optical devices. However, the at least one deflection element and/or blocking element is preferably chosen among mobile mirrors, liquid crystal devices, mobile prisms, liquid optics, and mobile lenses.

It is understood that the scope of the invention as defined by the claims comprises the case of a matrix of Fourier hologram on a liquid crystal display matrix.

For instance, the present invention can comprise as many light sources as deflection elements and as unidimensional matrix. As such, based on suitable input information, a deflection element can selectively trigger the display of a hologram chosen among the holograms of corresponding unidimensional matrix.

The head mounted device can further comprise at least one bidimensional deflection element and/or bidimensional blocking element configured to allow the at least one light source to illuminate a Fourier hologram of interest based on an external signal. Using a bidimensional deflection element allows to selectively display a hologram chosen among the holograms of a bidimensional matrix. Using such bidimensional deflection elements can thus allow to reduce the amount of light sources and deflection elements needed in order to display a given amount of virtual images. However, such bidimensional elements are more expensive and can sometime be less robust, which might be an issue when these are integrated in the frame of an eyewear. As such, there also are advantages to using regular, unidimensional, deflecting and/or blocking elements.

In order to allow using bidimensional deflecting elements with a lower deflection, the device can be configured as a bidimensional matrix of bidimensional submatrix. Each submatrix thus comprises its own bidimensional deflecting element and at least one source. Of course, any suitable configuration of bidimensional matrix and unidimensional matrix can be used for convenience sake, without departing from the scope of the present invention as defined by the claims.

The at least one deflection element and/or blocking element is preferably chosen among mobile mirrors, liquid crystal devices, mobile prisms, liquid optics, and mobile lenses. Specific possible deflection elements include 1D or 2D MEMS and galvanometric mirrors.

For ametropic wearers, visual comfort requires that suitable correction is provided not only for 'natural vision' (vision of the environment surrounding the wearer), but also for the visualization of the virtual image or holographic image.

For emmetropic wearers, correction for virtual vision may be required, for example following reduced reserve of accommodation, or for providing specific vision in different gaze directions (for example near-vision versus far-vision).

It is possible to adjust the position of the image by adjusting the angle between the reference beam and the object beam during the recording, thus providing the wearer with the possibility to display the image either anywhere on the lens e.g. on the top right part of the lens, on the bottom right part of the lens, or even in the middle of the field of view of the wearer. Adjusting the angle also allows to get rid of the zero order and of the conjugate image of of the order of interest, so as to hide unwanted beams.

The Fourier holograms could advantageously provide at least part of the needed correction, especially in case of an astigmatic wearer.

The virtual images can be displayed at different distances depending on the position of the wearer's head. For instance, when the head is upright and the wearer's gaze is directed to a direction parallel to the ground, the virtual images can be displayed at a long distance VL, preferably greater than 2m. When the head is directed toward the ground, the virtual images can be displayed at a lower distance VP, e.g. 33 cm. Doing so allows the wearer to visualize both the virtual images and the reality at the same time, without any need for accommodation.

The present invention will be more fully understood from the following detailed description of the embodiments thereof - to which the invention is not limited however -taken together with the drawings in which:
- Figure 1 is a schematic view of an head mounted device according to an embodiment of the present invention;
- Figure 2 is a schematic view of an head mounted device according to an alternate embodiment of the present invention;
- Figure 3 is a schematic view of an head mounted device according to an alternate embodiment of the present invention;
- Figure 4 is a schematic view of an head mounted device according to an alternate embodiment of the present invention; and
- Figure 5 illustrates different examples of virtual images which can be displayed in an head mounted device according to the present invention.

The head mounted device according to the invention can be designed to be used in a specific context like sport, hiking, driving, working, leisure, travel etc.

In most of these contexts, the device needs to be discrete and lightweight. messages notifications, of leisure or travel, and so on... In these contexts, the eyewears have to be discrete and lightweight. The information has to be clearly displayed, with a contrast high enough to allow a comfortable outside vision, and easy comprehension of the information. The information will also depend on the context. The information displayed in front of each eye can be different or identical.

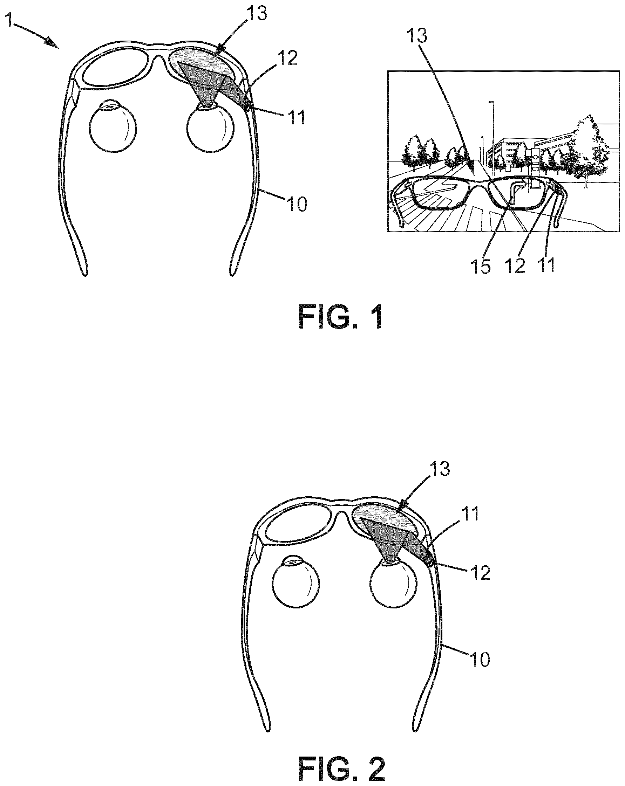

In a first exemplary embodiment of the present invention, illustrated in figure 1, both the source and the Fourier hologram are integrated in the frame 10 of an eyewear 1. The source 11 is located right behind the recorded Fourier hologram 12 which is a transmission Fourier hologram. One of the lenses of the eyewear 1 is designed to serve as a holographic mirror 13 in order to allow the visualization by the wearer of the virtual image15 recorded on the Fourier hologram 12. In the illustrated example, said virtual image 15 is an arrow which can be used by the wearer to obtain an itinerary based on GPS information obtained by an external source such as e.g. a smartphone.

Alternatively, the Fourier hologram 12 can be a reflection hologram. In the embodiment illustrated on Figure 2, the source is therefore positioned in front of the hologram and directed backward. Both the source and the hologram are still positioned in the frame of the eyewear 1, and one of the lenses is still used as a holographic mirror. A classical architecture can be advantageously used, with Rx adaptation, electrochromic lenses for contrast, image to infinity or conjugated with eye pupil, etc.

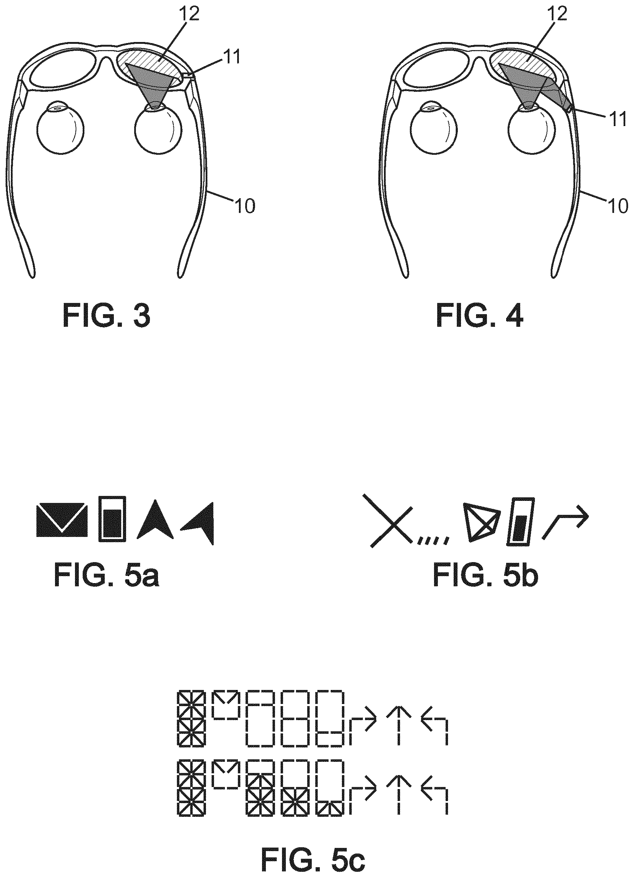

In the embodiment illustrated on Figure 3, the source is located in the front of the frame 10 and is configured to project a bright point in front of the wearer, e.g. on a wall. The bright point is used as a light source and illuminates a transmission Fourier hologram located in the lens of the eyewear. In an alternate embodiment not represented and not covered by the subject-matter of the claims, the source can be external of the device, for example in a car or an airport. This source will allow seeing the hologram on the lens.

The frame will preferably include a communication device to an external terminal to drive the display. Applications of such devices are detailed in international patent applications WO2015032824A1 and WO2015032828A1.

Alternatively, the Fourier hologram located in the lens of the eyewear can be a reflection Fourier hologram. In that case, which is illustrated on Figure 4, the source is better located in the frame. The virtual image is configured to be displayed directly on the lens rather than to be superimposed to the reality. Signals such as low battery can benefits from being displayed on the lens for instance.

In such set-up, there is no need for a holographic mirror. The Fourier reflection hologram contains all the characteristics of the frame and the wearer needs (Rx, geometrical characteristics of the frame and of the wearer's face, chosen images, direction of display and so on...). The frame contains only at least one source and potentially a deflection element to choose the image to show. The direction of the source beam will allow selecting the image to display. In this aim, the frame can include a deflecting element and/or several sources can be used.

A communication module can also be included to allow communication to and from an external terminal, such as a smartphone.

The frame 10 can be mounted by a professional or the retailer. The front of the frame can be one ensemble and the rims can be adapted to contain the Rx and electrochromic lenses with holographic mirrors, for example. The frame can be a standalone device, which can be replaced if needed. The display is adjusted to the front of the frame and the wearer. Batteries can be located in the frame, with drivers and Human-Computer Interaction chosen by the wearer. Photovoltaic cells can replace batteries in some embodiments of the invention.

Regular frame could also be tuned into a head mounted device according to the present invention by implementing an add-on on classical frames to obtain an information eyewear. It can be for example an add-on to clip on a temple and a holographic mirror patch to depose or glue on the lens. This patch can be manufactured on-demand with the wearer's frame and lenses measurement or in stock if the visual correction of the wearer is classical. The Fourier holograms can also be a patch to place on the wearer lens and the source a little add-on with a small driver and a LED, or a coherent light source, to clip on the temple.

When the display is switched off, the holographic mirror is transparent and does not disrupt the vision of the wearer.

Although these devices are presented in the case of monochromatic display, it is possible to make polychromatic displays thanks to polychromatic holographic mirrors. The Fourier hologram can be recorded in different colors.

The source can thus be an assembly of sources of different colours, or a polychromatic tunable source. The selection of the colour will be made at the same time than the selection of the image.

Edge-lite Fourier holograms can be used. In that case the source is placed really close to the lens or integrated in the edge of the lens. The lens can be divided in areas. Each area can be an edge-lite Fourier hologram.

The head mounted device according to the present invention advantageously comprises means for communicating with an external terminal, such as a smartphone, battery configured to provide energy to the sources, and a microcontroller or assimilated configured to drive the display of the image.

The head mounted device according to the present invention preferably includes an electrochromic lens, which serves both as a contrast improver and as a solar eyewear converter.

Images suitable for being displayed by a head mounted device according to the present invention are preferably simple images to display simple information. Such images limit the need for calculation power embedded in the frame, which means the overall device presents an increased autonomy. Example of simple images includes vector graphics, like arrows for GPS, image of a battery etc.

Each image is recorded as a single Fourier hologram on a holographic plate which dimensions can be as small as the diameter of the light beam used to display the image, i.e. from 1 to 4 mm².

Due to these small dimensions of the plate, it is possible to provide a matrix of holographic plates, either a unidimensional or bidimensional matrix. For instance, a 5x5 matrix of 1mm² plates could display up to 25 images. One source per image can be provided. Alternatively, several sources per image can be provided, e.g. in order to be able to display an image in different colors. The source is preferably chosen among a matrix of sources, preferably a dot matrix of LEDS or laser diodes, an OLED screen, and a LCD screen.

Providing a plurality of sources allows displaying a plurality of images simultaneously. However, it leads to an overall device which can be cumbersome and potentially energy-consuming.

As detailed above, when combined to a deflecting element - sometimes referred to as beam steering element- a single source can also be used to selectively display an image among the matrix; in that case, the amount of sources can be lower than the amount of images. It is also possible to provide several sources of different colors, each source being associated with a deflecting element: the amount of sources can thus be lower than the amount of images but still allows displaying images in several colors.

Limiting the amount of sources allows for a more compact device with a higher autonomy. However, displaying several images at the same time can prove to be an issue. This issue can be mitigated by using the persistence of vision to display several images alternately, with proper synchronisation.

Another kind of suitable matrix can be used to display segmented images. In that configuration, each holographic plate is configured to display a basic shape. By selectively displaying a given selection of shapes, it is possible to display a variety of images as a result of the combination of the aforesaid basic shapes.

Typical basic shapes are segments: with a 7-segment display, it is possible to display numeric symbols. A 16-segment display allows displaying alphanumeric symbols. Due to the small dimension of the Fourier holograms, it is possible to provide a matrix with an even greater number of segments in order to display more complex shapes. Figure 5c illustrates examples of virtual images obtained thanks to a 30-segment display.

This display is lightened with at least one source, the other sources having different wavelengths. In this case, the selection of the image and thus of the segments to display can be made thanks to a pixellised shutter, allowing the lightening of only the interesting part of the holographic matrix.

This display can also be lightened with at least one source and a 2D beam steering element or several 1D-deflection elements. It can also be lightened with several sources, each source lightening a part of the display.

If the application needs an external terminal, the images can depend on the software application.

Catalogues of images adapted to different contexts, situations, can be provided. The catalogues will be built with people proposing applications, developers of software, and so on. For instance, if the eyewears were linked to a brand "Xsmart", the proposed images could be linked to this brand by using the graphic chart, fronts, and logos of the brand or the software and apps used by this brand. Figures 5a and 5b illustrate an exemplary style that can be used for an eyewear used for hiking, or for eyewear linked to a brand of phone, respectively.

In the case of use in a car, it is possible to link the eyewear to the embedded computer of the car so as to obtain input information which can condition the display of virtual images on the eyewear. Such input information can be provided by the car's sensors, cameras, information like speed, direction, and so on. The information could be displayed on the eyewear directly, or could be processed and used to display a different information such as the information for a GPS application, parking places location if the car park is connected, and so on.

The wearer could select the images registered in the head mounted device among the aforementioned catalogue of images in order to personalize its device. The head mounted device could thus correspond to the uses of the frame of the wearer, to the preferred style and colors of the wearer, to the software application used with the device etc. The wearer could even make his own design for a more complete personalization.

Other possible personalization include the wearer optical prescription to adapt it to his vision, and the possibility to add electrochromic lenses, photochromic or filter lenses.

By using computer generated holograms, the wearer could also be provided with tools for directly printing the images and to place, or replace, them in the frame. The printing could be done at home with a resolved enough printer, or by a certified printer, in a generalist shop. In this aim, the frame can present means for allowing the wearer to insert a transparent piece of film. The calculation, if needed, could be made on sailor computers or computation servers, and sent to the wearer to print.

Unless explicitly stated otherwise, the word "or" is equivalent to "and/or". Similarly, the word "one" or "a" is equivalent to "at least one", unless stated otherwise.

## Claims

1. Head-mounted device (1) intended to be worn by a wearer.
wherein the head-mounted device is configured for the display and visualization, by the wearer, of at least one holographic image (15),
wherein said head-mounted device comprises:
- At least one light source (11), and
- At least one Fourier hologram (12) generating the at least one holographic image (15) when lit,
wherein said at least one light source (11) is configured for illuminating said at least one Fourier hologram (12), so as to cause visualization of the at least one holographic image (15) by the wearer,
**characterised in that** the head-mounted device comprises at least one holographic plate with said at least one Fourier hologram (12) recorded thereon.

2. Head mounted device according to claim 1, wherein said at least one holographic plate comprises at least one Fourier hologram (12) located in a frame (10) of the head mounted device.

3. Head mounted device according to any of claims 1 or 2, wherein said at least one holographic plate is located in a layer of an ophthalmic lens provided inside the head mounted device.

4. Head mounted device according to any of the preceding claims comprising at least one holographic mirror.

5. Head mounted device according to any of the preceding claims, wherein said at least one holographic plate comprises at least one transmission Fourier hologram (12).

6. Head mounted device according to any of the preceding claims, wherein said at least one holographic plate comprises at least one reflection Fourier hologram (12).

7. Head mounted device according to any of the preceding claims, wherein said at least one holographic image (15) comprises at least one holographic image consisting in vector graphics, preferably consisting in a plurality of segments.

8. Head mounted device according to any of the preceding claims, wherein said at least one light source (11) is a coherent light source.

9. Head mounted device according to any of the preceding claims, wherein said at least one light source (11) comprises at least two sources of two different colors.

10. Head mounted device according to the preceding claim, wherein said at least one Fourier hologram (12) comprises a matrix of Fourier holograms recorded on a matrix of holographic plates consisting in an assembly of at least one unidimensional matrix of holographic plates.

11. Head mounted device according to the preceding claim, wherein each unidimensional matrix of holographic plates is associated to at least one light source (11) and to at least one deflection element and/or blocking element, and wherein each at least one deflection element and/or blocking element is configured to allow associated light source to illuminate a Fourier hologram (12) of interest recorded on the associated unidimensional matrix based on an external signal.

12. Head mounted device according to claim 10, comprising at least one bidimensional deflection element and/or bidimentional blocking element configured to allow the at least one light source (11) to illuminate a Fourier hologram (12) of interest based on an external signal.

## Patentansprüche

1. Am Kopf befestigte Vorrichtung (1), die durch einen Träger getragen werden soll, wobei die am Kopf befestigte Vorrichtung für die Anzeige und Visualisierung, durch den Träger, von wenigstens einem holografischen Bild (15) konfiguriert ist, wobei die am Kopf befestigte Vorrichtung Folgendes umfasst:
- wenigstens eine Lichtquelle (11), und
- wenigstens ein Fourier-Hologramm (12), das das wenigstens eine holografische Bild (15) erzeugt, wenn es erleuchtet wird,
wobei die wenigstens eine Lichtquelle (11) zum Beleuchten des wenigstens einen Fourier-Hologramms (12) konfiguriert ist, so dass eine Visualisierung des wenigstens einen holografischen Bildes (15) durch den Träger bewirkt wird,
**dadurch gekennzeichnet, dass** die am Kopf befestigte Vorrichtung wenigstens eine holografische Platte mit dem darauf aufgezeichneten wenigstens einen Fourier-Hologramm (12) umfasst.

2. Am Kopf befestigte Vorrichtung nach Anspruch 1, wobei die wenigstens eine holografische Platte wenigstens ein Fourier-Hologramm (12) umfasst, das sich in einem Rahmen (10) der am Kopf befestigten Vorrichtung befindet.

3. Am Kopf befestigte Vorrichtung nach einem der Ansprüche 1 oder 2, wobei sich die wenigstens eine holografische Platte in einer Schicht einer ophthalmischen Linse befindet, die innerhalb der am Kopf befestigten Vorrichtung bereitgestellt ist.

4. Am Kopf befestigte Vorrichtung nach einem der vorhergehenden Ansprüche, die wenigstens einen holografischen Spiegel umfasst.

5. Am Kopf befestigte Vorrichtung nach einem der vorhergehenden Ansprüche, wobei die wenigstens eine holografische Platte wenigstens ein Transmission-Fourier-Hologramm (12) umfasst.

6. Am Kopf befestigte Vorrichtung nach einem der vorhergehenden Ansprüche, wobei die wenigstens eine holografische Platte wenigstens ein Reflexion-Fourier-Hologramm (12) umfasst.

7. Am Kopf befestigte Vorrichtung nach einem der vorhergehenden Ansprüche, wobei das wenigstens eine holografische Bild (15) wenigstens ein holografisches Bild umfasst, das aus Vektorgrafik besteht, bevorzugt aus mehreren Segmenten besteht.

8. Am Kopf befestigte Vorrichtung nach einem der vorhergehenden Ansprüche, wobei die wenigstens eine Lichtquelle (11) eine kohärente Lichtquelle ist.

9. Am Kopf befestigte Vorrichtung nach einem der vorhergehenden Ansprüche, wobei die wenigstens eine Lichtquelle (11) wenigstens zwei Quellen mit zwei unterschiedlichen Farben umfasst.

10. Am Kopf befestigte Vorrichtung nach einem der vorhergehenden Ansprüche, wobei das wenigstens eine Fourier-Hologramm (12) eine Matrix aus Fourier-Hologrammen umfasst, die auf einer Matrix aus holografischen Platten aufgezeichnet sind, die aus einer Anordnung aus wenigstens einer eindimensionalen Matrix aus holografischen Platten besteht.

11. Am Kopf befestigte Vorrichtung nach dem vorhergehenden Anspruch, wobei jede eindimensionale Matrix aus holografischen Platten mit wenigstens einer Lichtquelle (11) und mit wenigstens einem Ablenkungselement und/oder Blockierelement assoziiert ist und wobei jedes wenigstens eine Ablenkungselement und/oder Blockierelement dazu konfiguriert ist, zu ermöglichen, dass eine assoziierte Lichtquelle ein Fourier-Hologramm (12) von Interesse, das auf der assoziierten eindimensionalen Matrix aufgezeichnet ist, basierend auf einem externen Signal beleuchtet.

12. Am Kopf befestigte Vorrichtung nach Anspruch 10, die wenigstens ein zweidimensionales Ablenkungselement und/oder zweidimensionales Blockierelement umfasst, das dazu konfiguriert ist, zu ermöglichen, dass die wenigstens eine Lichtquelle (11) ein Fourier-Hologramm (12) von Interesse basierend auf einem externen Signal beleuchtet.

## Revendications

1. Dispositif de visiocasque (1) destiné à être porté par un porteur, le dispositif de visiocasque étant configuré pour l'affichage et la visualisation, par le porteur, d'au moins une image holographique (15),
ledit dispositif de visiocasque comprenant :
- au moins une source de lumière (11), et
- au moins un hologramme de Fourier (12) générant l'au moins une image holographique (15) lorsqu'il est éclairé,
ladite au moins une source de lumière (11) étant configurée pour éclairer ledit au moins un hologramme de Fourier (12), de manière à provoquer la visualisation de l'au moins une image holographique (15) par le porteur,
**caractérisé en ce que** le dispositif de visiocasque comprend au moins une plaque holographique avec ledit au moins un hologramme de Fourier (12) enregistré sur celle-ci.

2. Dispositif de visiocasque selon la revendication 1, ladite au moins une plaque holographique comprenant au moins un hologramme de Fourier (12) situé dans un cadre (10) du dispositif de visiocasque.

3. Dispositif de visiocasque selon l'une quelconque des revendications 1 ou 2, ladite au moins une plaque holographique étant située dans une couche de la lentille ophtalmique prévue à l'intérieur du dispositif de visiocasque.

4. Dispositif de visiocasque selon l'une quelconque des revendications précédentes, comprenant au moins un miroir holographique.

5. Dispositif de visiocasque selon l'une quelconque des revendications précédentes, ladite au moins une plaque holographique comprenant au moins un hologramme de Fourier en transmission (12).

6. Dispositif de visiocasque selon l'une quelconque des revendications précédentes, ladite au moins une plaque holographique comprenant au moins un hologramme de Fourier en réflexion (12).

7. Dispositif de visiocasque selon l'une quelconque des revendications précédentes, ladite au moins une image holographique (15) comprenant au moins une image holographique constituée en graphisme vectoriel, de préférence constituée d'une pluralité de segments.

8. Dispositif de visiocasque selon l'une quelconque des revendications précédentes, ladite au moins une source de lumière (11) étant une source de lumière cohérente.

9. Dispositif de visiocasque selon l'une quelconque des revendications précédentes, ladite au moins une source de lumière (11) comprenant au moins deux sources de deux couleurs différentes.

10. Dispositif de visiocasque selon la revendication précédente, ledit au moins un hologramme de Fourier (12) comprenant une matrice d'hologrammes de Fourier enregistrés sur une matrice de plaques holographiques consistant en un assemblage d'au moins une matrice unidimensionnelle de plaques holographiques.

11. Dispositif de visiocasque selon la revendication précédente, chaque matrice unidimensionnelle de plaques holographiques étant associée à au moins une source de lumière (11) et à au moins un élément de déviation et/ou un élément de blocage, et chacun de l'au moins un élément de déviation et/ou de l'élément de blocage étant configuré pour permettre à la source de lumière associée d'éclairer un hologramme de Fourier (12) d'intérêt enregistré sur la matrice unidimensionnelle associée sur la base d'un signal externe.

12. Dispositif de visiocasque selon la revendication 10, comprenant au moins un élément de déviation bidimensionnel et/ou un élément de blocage bidimensionnel configuré pour permettre à l'au moins une source de lumière (11) d'éclairer un hologramme de Fourier (12) d'intérêt basé sur un signal externe.
